# EUROPEAN PATENT SPECIFICATION

(11) **EP 1 652 953 B1**
(45) Date of publication and mention of the grant of the patent: **15.12.2010**
(21) Application number: 05256730.2
(22) Date of filing: 31.10.2005
(51) Int. Cl.: C23C 4/12, H05H 1/42, F01D 5/28, F01D 5/00, B23P 6/00

(54) **Methods for repairing a workpiece**
Verfahren zur Reparierung eines Werkstücks
Procédé de réparation d'un pièce

(30) Priority: 29.10.2004 US 976560; 29.10.2004 US 976561; 26.07.2005 US 190136; 26.07.2005 US 190135; 19.10.2005 US 253868; 29.10.2004 US 976969
(43) Date of publication of application: 03.05.2006
(60) Divisional application: 10011177.2
(73) Proprietor: United Technologies Corporation, Hartford, CT 06101 (US)
(72) Inventor: Blankenship, Donn R., Southbury, CT 06488 (US); Zajchowski, Paul H., Enfield, CT 06082 (US); Shubert, Gary, East Hampton, CT 06424 (US)
(74) Representative: Leckey, David Herbert

(56) References cited:
- EP-A- 0 808 913
- EP-A- 1 277 854
- US-A- 4 256 779
- US-A- 6 042 880
- US-A1- 2003 033 702
- US-A1- 2004 084 423

## Description

The present disclosure generally relates to a method for repairing a workpiece, and more particularly, a method for repairing a workpiece using a microplasma spray coating.

Generally, conventional plasma spray coating apparatus are imprecise in applying their plasma spray coatings due to the size and width of the plasma stream. The plasma spray coating process typically requires the workpiece to be masked in areas where the material transfer is not desired and/or not required. Conventional plasma spray coating methods and apparatus, such as the method disclosed in EP 0808913, require the masking of the workpiece before applying the coating, due to the plasma spray coating pattern being too wide to accurately control the coating process. Such operating conditions inhibit and/or render difficult the ability to spot coat workpieces in order to form a deposit and replace or augment parent material.

Consequently, there exists a need for a method for repairing a workpiece using a microplasma spray coating capable of being applied as a spot coating without the need for masking while still providing acceptable spray coating quality.

In accordance with the present invention, there is provided a method for repairing a workpiece using a microplasma spray coating apparatus as claimed in claim 1.

The details of one or more embodiments of the invention are set forth in the accompanying drawings and the description below. Other features, objects, and advantages of the invention will be apparent from the description and drawings, and from the claims.

### BRIEF DESCRIPTION OF THE DRAWINGS

FIG. 1 is a schematic view of a microplasma spray gun and a workpiece;
FIG. 2 is a partially exploded view of a microplasma spray apparatus;
FIG. 3 is a view of the microplasma spray apparatus of FIG. 2 applying a material to a workpiece; and
FIG. 4 is a flowchart of a process applying the material.

Like reference numbers and designation in the various drawings indicate like elements.

In performing the method(s) described herein, it is contemplated that a portable microplasma spray coating apparatus is utilized. It is also contemplated that the portable microplasma spray coating apparatus may be mounted on a mobile platform such as a vehicle, and transported to onsite locations to quickly facilitate repaid work. Such a portable microplasma spray coating apparatus is described in United States Patent Application No. 11/190,135 (Patent No. 7,115,832), assigned to United Technologies Corporation, the assignee of record wherein.

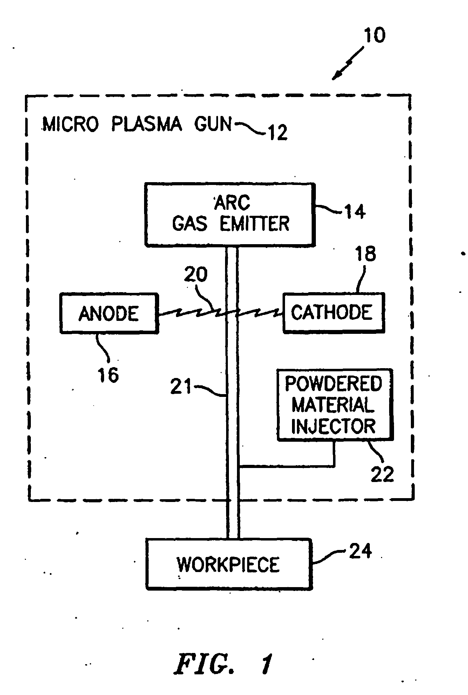

FIG. 1 shows a microplasma spray apparatus 10. The exemplary microplasma spray apparatus 10 includes a microplasma gun 12 having an arc gas emitter 14, an anode 16, and a cathode 18. An electric are 20 is generated between the anode 16 and cathode 18. A plasma stream 21 is formed when arc gas is injected from the arc gas emitter 14 through the arc 20. A powdered material injector 22 dispenses powdered material into the plasma gas stream, which transports the powdered material to the workpiece 24. As a result, the powdered material forms a deposit on a desired location on the workpiece 24.

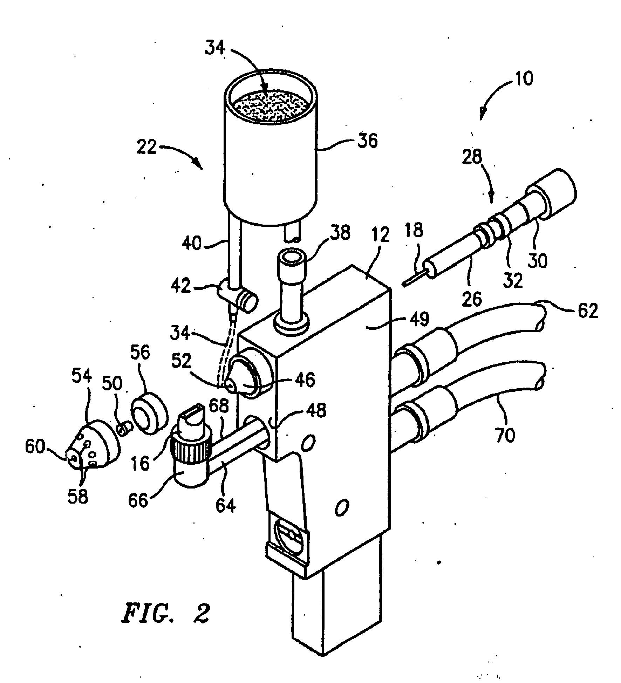

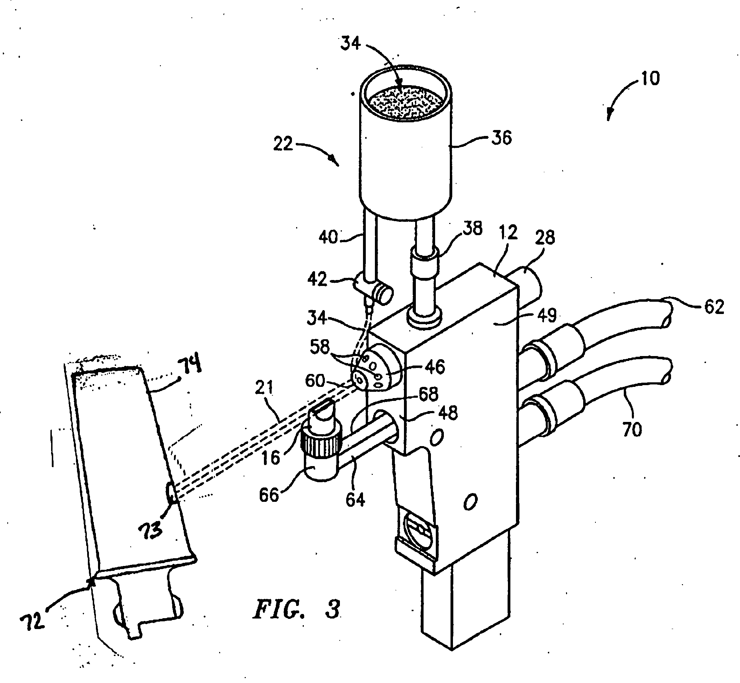

FIGS. 2 and 3 show further details of one exemplary microplasma spray apparatus 10. The apparatus 10 may be operable for depositing material on many things, including, but not limited to at least a portion of a blade 72 in a gas turbine engine (not shown).

In the exemplary embodiment, the cathode 18 is held within and extending from an insulated body 26 of a cathode cartridge or assembly 28. The exemplary cartridge 28 also includes threads 30 for threadingly engaging the microplasma gun body. The exemplary cathode 18 also includes an O-ring seal 32 to seal the leak path that is created at the interface between the cartridge 28 and the microplasma gun body.

In operation, an electric arc 20 (FIG. 1) is generated between the anode 16 and cathode 18. Arc gas such as, but not limited to, argon is emitted into the electric arc 20. The arc gas can be emitted prior to generating the electric arc. The electric arc ionizes the gas to create the plasma gas stream 21. The ionization process removes electrons from the arc gas, causing the arc gas to become temporarily unstable. The arc gas heats up to approximately 20,000°-30,000°F (11097°C to 16426°C) as it re-stabilizes. The plasma stream cools rapidly after passing through the electric arc.

A powdered material injector 22 injects powdered material 34 into the plasma gas stream 21. The powdered material 34 is heated to a super-plastic state in the plasma stream and is deposited on the blade (FIG. 3) where it cools and resolidifies to form the deposit. The exemplary powdered material injector 22 includes a powder hopper 36 for holding the powdered material 34. The exemplary hopper 36 is attached to the microplasma gun 12 via a connector 38 formed on the microplasma gun 12. The powdered material 34 is channeled through a discharge tube 40 and controlled by a valve 42 positioned in the discharge tube 40. The valve 42 can be mechanical or electromechanical as is known to those skilled in the art. There may be multiple hoppers (e.g., to contain multiple components mixed at discharge/injection. Powder may alternatively be injected into the plasma stream via one or more powder gas lines from one or more remote powder feeders (not shown).

A nozzle shroud 46 positioned on a forward wall 48 of the microplasma gun 12 holds a nozzle insert 50 and permits the electrode 28 to extend through a center aperture 52 formed in the nozzle shroud 46. The nozzle insert 50 can be threadingly attached to an end of the nozzle shroud 46. A shield gas cap 54 is positioned adjacent the nozzle shroud 46. An insulator 56 is positioned between the shield gas cap 54 and the nozzle shroud 46 to electrically isolate the shield gas cap 54 from the nozzle shroud 46. The shield gas cap 54 can be pressed to fit onto the nozzle shroud 46 and over the insulator 56. The shield gas cap 54 includes a plurality of through apertures 58 for permitting shield gas to flow therethrough and shield the arc gas from ambient atmosphere. A center aperture 60 formed in the shield gas cap 54 permits high velocity arc gas to pass through and into the electric arc.

Cooling fluid, such as water or the like, may be utilized to cool the microplasma gun 12. The cooling fluid is delivered to the microplasma gun 12 via a cooling fluid hose 62. The cooling fluid traverses through internal passages (not shown) in the microplasma gun 12 and flows through an inlet passage 64, into an anode holder 66 and back through an outlet passage 68. The cooling fluid reduces the temperature of the anode 16 during operation of the microplasma gun 12. The cooling flow rate may be approximately 0.1 to 1 gallons per minute. A second conduit 70 is connected to the microplasma gun 12. The second conduit may be operable for providing electrical power, arc gas, and shield gas to the microplasma gun 12.

The microplasma gun 12 may be operated at a relatively low power range of between approximately 0.5 Kilowatts and 4 Kilowatts. The low power output of the microplasma gun 12 significantly reduces the heat flow into the blade 72 over that of conventional coating methods. The maximum surface temperature of the blade 72 caused by the coating process is approximately 200°F (93°C) depending on the mass of the blade. The microplasma gun 12 is operable for applying powdered material 34 to a thin wall area of the blade 72 without distorting the blade 72 because the low power output limits the localized stress caused by high thermal gradients.

The powder hopper 36 holds the powdered material 34 prior to being injected into the plasma gas stream 21 by the powder injector 22. The powdered material 34 can be injected into the plasma gas stream 21 either through gravity feed or through a pressurized system (not shown). The shut-off control valve 42 controls the powdered material 34 feed rate into the plasma gas stream 21. Powdered material 34 is transferred to the blade 72 at an approximately 1 to 30 grams per minute. When employing a pressurized system, the powder gas flow may be at approximately 0.1 to 1.5 liters per minute. Generally, the microplasma gun 12 may be positioned from a component to be coated at a distance of approximately 1.5 inches (3.8 centimeters) to 8 inches (20 centimeters). The microplasma gun 12 may apply the material from exemplary distances of approximately 2.5 inches (6.4 centimeters) to 6.5 inches (16.5 centimeters) to the blade 72, or other components, but can vary depending on the coating application requirements. The exemplary microplasma spray gun 12 can be oriented between a positive 45° angle and a negative 45° angle relative to a normal axis of the blade and still provide adequate material delivery with a gravity feed system. A pressure feed system may provide greater orientational freedom for the microplasma, gun 12. The microplasma spray gun 12 advantageously generates a relatively low noise level that ranges (e.g., 40-70dB) due to the low power output, thereby making the apparatus 10 suitable for hand held application. Current U.S. government regulations require hearing projection when environmental noise reaches 85dB. The microplasma spray apparatus 10 is hand held. Although, alternatively, albeit in an arrangement that does not fall within the scope of the claims, the microplasma spray apparatus can be held in an automated fixture (not shown) that is computer controlled.

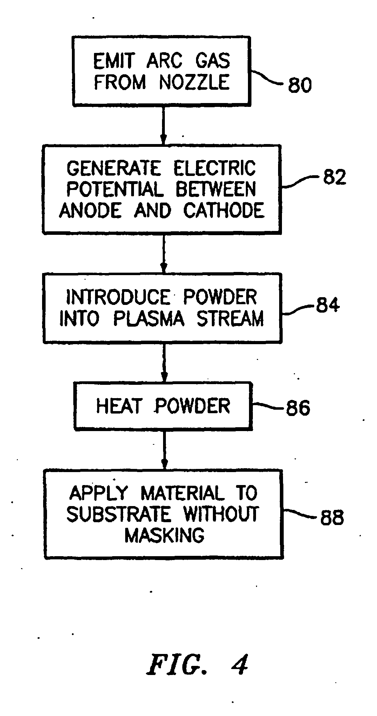

FIG. 4 shows the operation of the microplasma spray apparatus 10. Initially, at block 80, arc gas is emitted from the nozzle insert 50. An electric potential it generated between the anode 16 and the cathode 18 of the plasma spray gun 12 and is directed through the arc gas, as described in block 82. Are gas is directed through the electric potential to create the plasma stream 21. At: block 84, powdered material 34 is injected into the plasma stream 21. At block 86, the plasma stream heats the powdered material 34 to a "super plastic" condition such that the powdered material 34 is malleable when it is applied to a workpiece. At block 88, the powdered material 34 is applied to an unmasked substrate. The powdered material 34 then bonds with the substrate and cools to form a solid deposit on the substrate. Optionally, prior to applying the powdered material 34, the surface ot the unmasked substrate may be roughened to improve the adhesive properties of the substrate surface to receive the powdered material 34. The substrate surface may be roughened using mechanical techniques (e.g., grit blasting), thermionic cleaning, or combinations using such techniques, and the like, as known to one of ordinary skill in the art, and then cleaned to remove contaminants and excess remnants of the roughening processes.

The microplasma gun 12 can apply the material in small spots (e.g., about 1 millimeter to about 5 millimeters in diameter) or apply a stream of material in a sweeping motion to form narrow strips (e.g., about 0.5 millimeters to about 5 millimeters in width) . For purposes of the intended application, the microplasma gun preferably applies material in small spots to repair coating chips. This permits accurate surface coating even with a hand held device. The small spot/strip size may substantially eliminate the need for masking or otherwise covering the blade 72 in areas where the material is unwanted. The nozzle opening size controls the spray pattern. The hand-held version of the microplasma gun 12 may be sufficiently accurate that material can be sprayed on components while they remain installed in an engine or the like.

An exemplary arc gas flow rate of the microplasma apparatus 10 may be about 0.5 to about 3 liters per minute. As stated above, the arc gas and shield gas are typically argon, but any suitable inert gas can be utilized. An exemplary shield gas flow rate ranges may be about 2 to about 8 liters per minute for a typical application.

For purposes of illustration, and not to be taken in a limiting sense, the methods for repairing workpieces contemplated herein will be described with respect to using the a forementioned portable, hand-held microplasma spray coating apparatus.

It is also contemplated, albeit in arrangements that do not fall within the scope of the claims, as will be recognized by one of ordinary skill in the art that the aforementioned portable, hand-held microplasma apparatus may be outfitted for use in a stationary microplasma spray coating apparatus, an automated microplasma spray coating apparatus, a remote controlled microplasma spray coating apparatus and a robotic or robot implemented microplasma spray coating apparatus. The stationary, automated, remote controlled and robotic implemented models are typically utilized within an enclosure such as a dedicated room where the ultra violet light level may be controlled and excess microplasma spray and/or powdered material may be collected with ease.

The workpieces comprise various gas turbine engine and turbomachinery component related, but not limited to, a fan, turbine, compressor, vane, blade, casing, combustion chamber, combustor panel, seals, rings, and the like.

As used herein, the term "coated workpiece" means a turbine engine component having at least one layer of coating covering the entire surface or substantially the entire surface of the part. As used herein, the term "unstripped, coated workpiece" means a coated workpiece whose coating layer(s) have not been stripped off or removed to expose the workpiece surface or intermediate layers of coating. As used herein, the term "localized damage site" represents an exposed portion of an intermediate layer of coating and/or the workpiece surface. As used wherein, the term "unstripped, coated workpiece having a localized damage site" means a coated workpiece having a localized damage sits surrounded by the remaining coating layers.

FIG. 3 shows a coated workpiece having a localised damage site, for example, the blade 72 having a localized damage site 73 along an airfoil 74, Such a damage site 73 or other localized area may receive a deposit of the powdered material 34. The plasma gas stream 21 is directed toward the damage site 73. The site may be a raw damage site or a treated site (e.g., where further material has been machined from the blade substrate such as to remove contaminants) such as a spot or a chip, or require dimensional restoration.

The powdered material may be provided as a single powder of a single alloy as a mechanical blend or multiple alloys either pre-mixed or mixed by the apparatus. The component powders may be selected in view of the workpiece properties. The workpiece may comprise a nickel-based alloy, a cobalt- based alloy, a ferrous-based alloy such as steel, a titanium- based alloy, an aluminum-based alloy, and combinations thereof. The apparatus may be used to form a deposit for replacing parent material lost from the substrate (e.g., due to damage plus cleaning and preparation) or to augment (e.g., fill a manufacturing defect, coat with a dissimilar material, or otherwise).

The workpiece may comprise any component used in operating conditions where a protective coating is necessary to withstand, for example, burn-through, diffusion-controlled deformation ("creep"), cyclic loading and unloading ("fatigue"), chemical attack by hot gas flow ("oxidation"), wear from contact with other parts, wear from the impact of particles entrained in the gas flow ("erosion"), foreign object damage ("FOD"), dimensional restoration, and the like. For purposes of illustration, and not to be taken in a limiting sense, the workpiece may be a gas turbine engine blade. In addition, the workpiece may comprise any of the aforementioned gas turbine engine and turbomachinery components. Gas turbine engine components and associated hot section hardware are typically coated with a metallic coat alone or a metallic bond coat and a ceramic top coat. Accordingly, the aforementioned gas turbine engine components may have dimensions restored with various metallic coatings.

The metallic bond coat may comprise any suitable bond coat known in the art. For example, the bond coat may be formed from an aluminum containing material, e.g., nickel aluminum; an aluminide, e.g., a platinum aluminide; or an MCrAlY material where M includes, but is not limited to, nickel, cobalt, or other alloys, which are well known in the art. The ceramic top coat may comprise a thermal barrier coating comprising, for example, yttria stabilized zirconia. Representative thermal barrier coatings may include, but are not limited to, those described in, for example, United States Patent No. 4,861,618 to Vine et al., assigned to United Technologies Corporation.

The metallic bond coat may be applied to the damage site 73. Such precise spot or chip repair is possible due to the narrow microplasma stream being generated. The metallic bond coat material adheres to the workpiece substrate material. A maskant or masking agent in minimal amounts is commonly utilized to prevent the area surrounding the damage site 73 from receiving additional metallic bond coat material. The ceramic top coat may then be applied as a full ceramic coat, that is, applied on the damage site 73 and the entirety of the surface of the blade 72. The added materials strengthen the area under repair by substantially reinforcing the eroded/machined repair surface. For example, the coating may serve to provide wear resistance to the damaged site. The repair site, when fully processed (e.g., by heat treatment processing) has properties approaching those of the original coated parent part surface.

## Claims

1. A method for repairing a workpiece (72) using a microplasma spray coating apparatus, and whilst the workpiece remains installed in a gas turbine engine, comprising:
providing an unstripped, coated workpiece (72) comprising a surface having a localized damage site (73), wherein said workpiece comprises a gas turbine engine component;
using a hand hold and operated microplasma spray gun, which comprises an anode and a cathode, to generate a microplasma stream (21) by passing an inert arc gas into an electric arc (20) generated by the anode (16) and the cathode (18) of said microplasma spray coating apparatus;
feeding a quantity of a first powdered material (34) into said microplasma stream (21) and applying said first powdered material (34) to said localized damage site (73) using said microplasma stream (21); and
feeding a quantity of a second powdered material (34) into said microplasma stream (21) and applying said second powdered material (34) to said workpiece surface using said microplasma stream (21).

2. The method of claim 1, wherein said workpiece (72) is a turbine engine component comprising one or more protective barrier coatings comprising a bond coat layer disposed underneath a thermal barrier coat layer.

3. The method of claim 1 or 2, further comprising masking said workpiece (72) about said localized damage site (73), wherein said masking comprises applying a maskant or a masking agent to a transition zone surrounding said damage site (73).

4. The method of any preceding claim, wherein said first powdered material (34) comprises a bond coat material having a formula comprising MCrAlY wherein M is selected from the group consisting of nicker, cobalt and mixtures thereof.

5. The method of any of claims 1 to 3, wherein said first powdered material (34) is selected from the group consisting of nickel-aluminum, nickel-chromium, nickel chromium-aluminum, molybdenum and aluminum-silicon.

6. The method of any of claims 1 to 3, wherein said first powdered material (34) is nickel-chrome-chromium carbide.

7. The method of any preceding claim, wherein said second powdered material (34) comprises a thermal barrier coating material.

8. The method of any preceding claim, wherein said workpiece (72) is selected from the group consisting of fans, compressors, turbine casings, seals, plates, rings.

9. The method of any preceding claim, wherein said workpiece (72) is a gas turbine engine component.

10. The method of any preceding claim, wherein said workpiece (72) is a combustion chamber component.

11. The method of any preceding claim, wherein said localized damage site (73) comprises a spot or a chip.

## Patentansprüche

1. Verfahren zum Reparieren eines Werkstücks (72) unter Verwendung einer Mikroplasma-Sprühbeschichtungsvorrichtung, während das Werkstück in einer Gasturbinenmaschine installiert bleibt, wobei das Verfahren folgende Schritte aufweist:
Bereitstellen eines nicht abgezogenen, beschichteten Werkstücks (72), das eine Oberfläche mit einer lokalen Schadstelle (73) aufweist, wobei das Werkstück eine Gasturbinenmaschinenkomponente aufweist;
Verwendung einer in der Hand zu haltenden und zu betätigenden Mikroplasma-Spritzpistole, die eine Anode und eine Kathode aufweist, zum Erzeugen einer Mikroplasma-Strömung (21) durch Führen eines inerten Lichtbogengases in einen elektrischen Lichtbogen (20), der von der Anode (16) und der Kathode (18) der Mikroplasma-Sprühbeschichtungsvorrichtung erzeugt wird;
Zuführen einer Menge eines ersten Pulvermaterials (34) in die Mikroplasma-Strömung (21) und Aufbringen des ersten Pulvermaterials (34) auf die lokale Schadstelle (73) unter Verwendung der Mikroplasma-Strömung (21); und
Zuführen einer Menge eines zweiten Pulvermaterials (34) in die Mikroplasma-Strömung (21) und Aufbringen des zweiten Pulvermaterials (34) auf die Werkstückoberfläche unter Verwendung der Mikroplasma-Strömung (21).

2. Verfahren nach Anspruch 1,
wobei das Werkstück (72) eine Turbinenmaschinenkomponente ist, die eine oder mehrere Schutzbarrierenbeschichtungen aufweist, die eine unter einer Wärmebarrierenüberzugsschicht angeordnete Verbindungsüberzugsschicht aufweisen.

3. Verfahren nach Anspruch 1 oder 2,
bei dem weiterhin das Werkstück (72) um die lokale Schadstelle (73) herum maskiert wird, wobei das Maskieren das Aufbringen einer Maskierung oder eines Maskiermittels auf eine die Schadstelle (73) umgebende Übergangszone umfasst.

4. Verfahren nach einem der vorausgehenden Ansprüche,
wobei das erste Pulvermaterial (34) ein Verbindungsüberzugsmaterial mit einer Zusammensetzung aufweist, die MCrAlY aufweist, wobei M aus der Gruppe ausgewählt wird, die aus Nickel, Kobalt und Mischungen davon besteht.

5. Verfahren nach einem der Ansprüche 1 bis 3,
wobei das erste Pulvermaterial (34) aus der Gruppe ausgewählt wird, die aus Nickel-Aluminium, Nickel-Chrom, Nickel-Chrom-Aluminium, Molybdän und Aluminium-Silizium besteht.

6. Verfahren nach einem der Ansprüche 1 bis 3,
wobei es sich bei dem ersten Pulvermaterial (34) um Nickel-Chrom-Chromcarbid handelt.

7. Verfahren nach einem der vorausgehenden Ansprüche,
wobei das zweite Pulvermaterial (34) ein Wärmebarrierenbeschichtungsmaterial aufweist.

8. Verfahren nach einem der vorausgehenden Ansprüche,
wobei das Werkstück (72) aus der Gruppe ausgewählt wird, die aus Gebläsen, Verdichtern, Turbinengehäusen, Dichtungen, Platten, Ringen besteht.

9. Verfahren nach einem der vorausgehenden Ansprüche,
wobei es sich bei dem Werkstück (72) um eine Gasturbinenmaschinenkomponente handelt.

10. Verfahren nach einem der vorausgehenden Ansprüche,
wobei es sich bei dem Werkstück (72) um eine Brennkammerkomponente handelt.

11. Verfahren nach einem der vorausgehenden Ansprüche,
wobei die lokale Schadstelle (73) eine Defektstelle oder eine Abplatzung aufweist.

## Revendications

1. Procédé de réparation d'une pièce (72) en utilisant un appareil de revêtement par pulvérisation de microplasma, la pièce restant installée dans un moteur à turbine à gaz, le procédé comprenant les étapes qui consistent à :
prévoir une pièce (72) revêtue et non décapée dont une surface présente un site localement endommagé (73), ladite pièce comprenant un composant de moteur à turbine à gaz,
utiliser un canon de pulvérisation de microplasma maintenu et actionné à la main, qui comprend une anode et une cathode, pour produire un écoulement (21) de microplasma en faisant passer un gaz inerte dans un arc électrique (20) produit par l'anode (16) et la cathode (18) dudit appareil de revêtement par pulvérisation de microplasma,
introduire une certaine quantité d'un premier matériau (34) en poudre dans ledit écoulement (21) de microplasma et appliquer ledit premier matériau en poudre (34) sur ledit site localement endommagé (73) en utilisant ledit écoulement (21) de microplasma et
introduire une certaine quantité d'un deuxième matériau (34) en poudre dans ledit écoulement (21) de microplasma et appliquer ledit deuxième matériau (34) en poudre sur ladite surface de la pièce en utilisant ledit écoulement (21) de microplasma.

2. Procédé selon la revendication 1, dans lequel ladite pièce (72) est un composant de moteur à turbine comprenant un ou plusieurs revêtements de barrière protectrice comprenant une couche de revêtement de liaison disposée en dessous d'une couche de revêtement de barrière thermique.

3. Procédé selon les revendications 1 ou 2, comprenant en outre l'étape qui consiste à masquer ladite pièce (72) autour dudit site localement endommagé (73), ladite application du masque comprenant l'application d'un masque ou d'un agent de masquage sur une zone de transition qui entoure ledit site endommagé (73).

4. Procédé selon l'une quelconque des revendications précédentes, dans lequel ledit premier matériau (34) en poudre contient un matériau de revêtement de liaison dont la formule contient MCrAlY, dans laquelle M est sélectionné dans l'ensemble constitué du nickel, du cobalt et de leurs mélanges.

5. Procédé selon l'une quelconque des revendications 1 à 3, dans lequel ledit premier matériau (34) en poudre est sélectionné dans l'ensemble constitué des mélanges de nickel et d'aluminium, de nickel et de chrome, de nickel et de chrome-aluminium, de molybdène et de silicium-aluminium.

6. Procédé selon l'une quelconque des revendications 1 à 3, dans lequel ledit premier matériau (34) en poudre est un carbure de nickel-chrome et de chrome.

7. Procédé selon l'une quelconque des revendications précédentes, dans lequel ledit deuxième matériau (34) en poudre contient un matériau de revêtement de barrière thermique.

8. Procédé selon l'une quelconque des revendications précédentes, dans lequel ladite pièce (72) est sélectionnée dans l'ensemble constitué des aubes, des compresseurs, des caissons de turbine, des joints d'étanchéité, des plaques et des bagues.

9. Procédé selon l'une quelconque des revendications précédentes, dans lequel ladite pièce (72) est un composant de moteur à turbine à gaz.

10. Procédé selon l'une quelconque des revendications précédentes, dans lequel ladite pièce (72) est un composant de chambre de combustion.

11. Procédé selon l'une quelconque des revendications précédentes, dans lequel ledit site localement endommagé (73) présente une tache ou une entaille.
